**Europäisches Patentamt**

**European Patent Office**

**Office européen des brevets**

(11) Veröffentlichungsnummer: **0 450 463 A1**

# (12) EUROPÄISCHE PATENTANMELDUNG

(21) Anmeldenummer: **91104750.4**

(22) Anmeldetag: **25.03.91**

(51) Int. Cl.5: **B01D 53/34**

(30) Priorität: **26.03.90 DE 4010010**

(43) Veröffentlichungstag der Anmeldung:
**09.10.91 Patentblatt 91/41**

(84) Benannte Vertragsstaaten:
**AT CH DE DK FR GB LI NL**

(71) Anmelder: **Hartmann, Helmut Dr.**
**Im Rosengarten 1**
**W-6521 Bechtheim 1(DE)**

Anmelder: **Nehring, Christoph**
**Peenestrasse 12**
**W-4300 Essen(DE)**

(72) Erfinder: **Hartmann, Helmut Dr.**
**Im Rosengarten 1**
**W-6521 Bechtheim 1(DE)**
Erfinder: **Nehring, Christoph**
**Peenestrasse 12**
**W-4300 Essen(DE)**

(74) Vertreter: **Bonsmann, Manfred, Dipl.-Ing.**
**Kaldenkirchener Strasse 35a**
**W-4050 Mönchengladbach 1(DE)**

(54) **Verfahren zur Dekontamination und Reinigung von toxischen Medien mit vorwiegand organischem Charakter.**

(57) Es wird ein Verfahren zur Dekontamination und Reinigung von toxischen Medien mit vorwiegend organischem Charakter beschrieben. Es handelt sich dabei insbesondere um Öl-, Wasser- und Säuregemische, wie sie bei der Konversion von Klär- und/oder Industrieschlämmen, Hausmüll und/oder anderen Massen mit organischen Anteilen auftreten. Dabei werden - je nach Auftreten und Bedarf - Nutzstoffe aus den schadstoffbelasteten Stoffströmen extrahiert, die Schadstoffe abgetrennt und durch thermische Nachverbrennung zerstört. Dabei werden Hochtemperaturkorrosionszonen durch Kühlung vermieden, wobei die einzelnen Prozeßschritte zur Nutzstoffextraktion, Schadstoffzerstörung und der Reinigung der belasteten Massenströme sowie die einzelnen Massenströme je nach Anfall und Bedarf kombiniert werden. Zusätzlich können gezielt und gestuft prozeßfremde Flüssigkeiten/Gase mit Schadstoffcharakter, wie beispielsweise Deponiesickerwässer und/oder deren Konzentrate sowie Deponiegase, gereinigt werden.

Die Erfindung betrifft ein Verfahren zur Dekontamination und Reinigung von toxischen Medien mit vorwiegend organischem Charakter, insbesondere von Öl-, Wasser- und Säuregemischen, wie sie bei der Konversion von Substraten z.B. Klär- und/oder Industrieschlämmen, Hausmüll und/oder anderen Massen mit organischen Anteilen, auftreten, wobei bei der Erzeugung von koksähnlichen, festen Brennstoffen auch Öl-, Wasser- und Säuregemische als Dämpfe und Gase anfallen, bei das mit Schadstoffen, wie z.B. Halogen-Wasserstoffen, belastete Öl-, Wasser- und Säuregemisch als Dampf/Gas zur Dekontamination bzw. Zerstörung der Schadstoffe einer thermischen Nachverbrennung unterzogen wird und die Abgase aus der Nachverbrennung eine Endreinigung durch z.B. Calcium-Reaktion und/oder Entstickung passieren und dann z.B. in die Atmosphäre geleitet werden.

Aus der Konversion von z.B. Klär- und/oder Industrieschlämmen werden koksähnliche feste Stoffe gewonnen. Bei diesem Prozeß fallen toxische Medien aus Öl-, Wasser- und Säuregemischen als Dämpfe sowie zusätzliche Gase an. Die toxischen Flüssigkeiten und die Gase müssen von Schadstoffbelastungen wie z.B. halogenierten Kohlenwasserstoffen, Dioxinen usw. gereinigt werden. Die Schadstoffe sind zu zerstören. Die Zerstörung von halogenierten Kohlenwasserstoffen erfolgt thermisch bei Temperaturen von 800° bis 1200° C und unter bestimmten Verweilzeiten in Nachverbrennungen. Hierbei bilden sich nach Abkühlung der Abgase z.B. Chlor- und Fluorsäuren.

Organische Schwefelbelastungen in den toxischen Flüssigkeiten werden bei Nachverbrennungsvorgängen in anorganische Schwefelverbindungen überführt und können über Calciumreaktionen zusammen mit den Chlor- und Fluorverbindungen ausgeschieden werden. Hochtemperaturige Nachverbrennungen können in den Abgasen einen unzulässigen Stickstoff-Überschuß erzeugen, der aus den Abgasen entfernt werden muß.

Die Abgase aus thermischen Nachverbrennungen sind bei Temperaturen von über 700° C wegen ihres Chlor- und Schwefelgehaltes hoch korrosiv.

Der Erfindung liegt im wesentlichen die Aufgabe zugrunde, bei Verfahren der eingangs genannten Art das Auftreten von Zonen einer Hochtemperaturkorrosion auf ein Minimum zu begrenzen.

Zur Lösung dieser Aufgabe ist erfindungsgemäß vorgesehen, daß die Abgase aus der Nachverbrennung vor der Endreinigung zur weitgehenden Vermeidung von Hochtemperatur-Korrosion gekühlt werden, und zwar

a) daß eine vorzugsweise direkte Kühlung der Abgase aus der Nachverbrennung erfolgt und/oder

b) daß die Kühlung durch Zufuhr von prozeßeigenem Überschußwasser/Abwasser erfolgt und/oder

c) daß die Kühlung durch Zugabe zusätzlicher Ersatzwassermengen mit Schadstoffcharakter (z.B. Deponiesickerwässer oder deren Konzentrate) erfolgt und diese Ersatzwässer so mitentsorgt werden und/oder

d) daß zur Kühlung der Abgase vorgekühlte Motorengase durch Einmischen eingesetzt und so von Schadstoffen mitgereinigt werden.

Mit der Erfindung wird ein Dekontaminations- und Reinigungsverfahren geschaffen, welches es erlaubt, die Dekontamination bzw. Reinigung von prozeßeigenen und zusätzlichen prozeßfremden Schadstoffen in verschiedenen Massenströmen je nach Auftreten von Schadstoffen gezielt, gestuft und alternativ durchzuführen. Ein weiterer Vorteil besteht darin, daß das Auftreten von Zonen der Hochtemperaturkorrosion auf ein Minimum begrenzt wird, indem prozeßinterne und fremde Massenströme mit Schadstoffcharakter zur gezielten Kühlung unter möglicher Wärmerückgewinnung herangezogen werden.

In weiterer Ausgestaltung der Erfindung kann vorgesehen sein, daß die Kühlung der Abgase aus der thermischen Nachverbrennung zur Vermeidung von Hochtemperaturkorrosion indirekt über Wärmeaustauscher erfolgt, wobei Wärmeträgermedien zur weiteren Nutzung erwärmt werden können.

In weiterer Ausgestaltung der Erfindung kann vorgesehen sein, daß der thermischen Nachverbrennung zusätzlich andere Schadstoffe (z.B. Deponiegase) zugeführt werden.

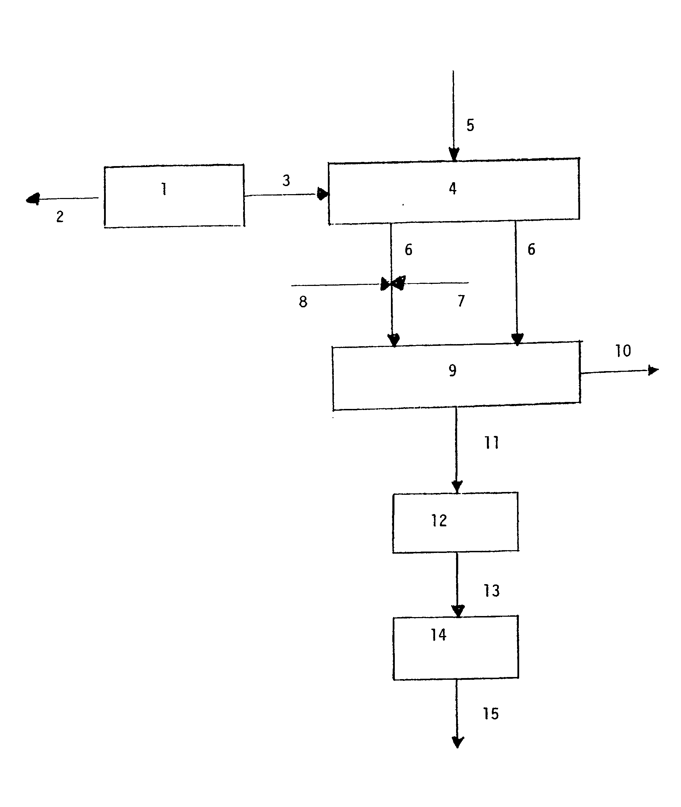

Die Erfindung wird nachfolgend anhand des in der Zeichnung schematisch dargestellten Ausführungsbeispiels erläutert. Die Zeichnung zeigt ein Verfahrensschema der einzelnen Prozeßschritte.

Aus einer Konversionsanlage 1 tritt als Nutzstoff ein gewonnener Festbrennstoff 2 sowie ein Gemenge 3 aus Gasen und Dämpfen der toxischen Medien aus. Das Gemenge 3 wird in einer thermischen Nachverbrennung 4 unter möglicher Zuleitung von weiteren, prozeßfremden Schadgasen 5 von z.B. organischen, halogenierten Kohlenwasserstoffen gereinigt und als Heißgas 6 durch Zufuhr vorgekühlter Motorenabgase 7 und/oder Einspritzung prozeßinternen Überschußwassers/Abwassers 8 auch prozeßfremdes und/oder indirekte Kühlung 9 abgekühlt, um eine mögliche Hochtemperaturkorrosion zu vermeiden, wobei ein Wärmeträgermedium 10 erhitzt werden kann. Das gekühlte Abgas 11 wird in einer Entschwefelung 12, z.B. durch Calcium-Reaktion, von organischen Schwefelverbindungen gereinigt. Das schwefelfreie Abgas 13 wird in einer Entstickungseinrichtung 14 z.B. über Katalysatoren entstickt. Das Reingas 15 wird in die Umwelt entlassen.

**Patentansprüche**

1. Verfahren zur Dekontamination und Reinigung von toxischen Medien mit vorwiegend organischem Charakter, insbesondere von Öl-, Wasser- und Säuregemischen, wie sie bei der Konversion von Substraten, z.B. Klär- und/oder Industrieschlämmen, Hausmüll und/oder anderen Massen mit organischen Anteilen, auftreten, wobei bei der Erzeugung von koksähnlichen, festen Brennstoffen auch Öl-, Wasser- und Säuregemische als Dämpfe und Gase anfallen, bei dem das mit Schadstoffen, wie z.B. Halogen-Wasserstoffen, belastete Öl-, Wasser- und Säuregemisch als Dampf/Gas zur Dekontamination bzw. Zerstörung der Schadstoffe einer thermischen Nachverbrennung unterzogen wird und die Abgase aus der Nachverbrennung eine Endreinigung durch z.B. Calcium-Reaktion und/oder Entstickung passieren und dann z.B. in die Atmosphäre geleitet werden, dadurch gekennzeichnet, daß die Abgase aus der Nachverbrennung vor der Endreinigung zur weitgehenden Vermeidung von Hochtemperatur-Korrosion gekühlt werden, und zwar

    a) daß eine vorzugsweise direkte Kühlung der Abgase aus der Nachverbrennung erfolgt und/oder

    b) daß die Kühlung durch Zufuhr von prozeßeigenem Überschußwasser/Abwasser erfolgt und/oder

    c) daß die Kühlung durch Zugabe zusätzlicher Ersatzwassermengen mit Schadstoffcharakter (z.B. Deponiesickerwässer oder deren Konzentrate) erfolgt und diese Ersatzwässer so mitentsorgt werden und/oder

    d) daß zur Kühlung der Abgase vorgekühlte Motorengase durch Einmischen eingesetzt und so von Schadstoffen mitgereinigt werden.

2. Verfahren nach Anspruch 1, dadurch gekennzeichnet, daß eine indirekte Kühlung der Abgase aus der thermischen Nachverbrennung zur Vermeidung von Hochtemperaturkorrosion über Wärmetauscher erfolgt, wobei Wärmeträgermedien zur weiteren Nutzung erwärmt werden können.

3. Verfahren nach Anspruch 1 oder 2, dadurch gekennzeichnet, daß der thermischen Nachverbrennung zusätzlich andere Schadstoffe (z.B. Deponiegase) zugeführt werden.

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-2 928 693 (P.W.BARKHAUS ET AL.) <br> * Seite 7, Zeilen 16 - 30; Anspruch 1; Figur 1 * <br> - - - | 1,3 | B 01 D 53/34 |
| A | CHEMICAL ENGINEERING 21 Mai 1979, Seiten 185-194, New York, U.S.A; D.A.HITCHCOCK: "Solid-waste disposal:Incineration" <br> * das ganze Dokument * <br> - - - - - | 1-3 | |
| | | | **RECHERCHIERTE SACHGEBIETE (Int. Cl.5)** <br><br> B 01 D <br> F 23 G <br> B 09 B |

Der vorliegende Recherchenbericht wurde für alle Patentansprüche erstellt

| Recherchenort | Abschlußdatum der Recherche | Prüfer |
|---|---|---|
| Berlin | 19 Juni 91 | BERTRAM H E H |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument